# EUROPEAN PATENT APPLICATION

(11) **EP 3 205 846 A1**
(43) Date of publication of application: **16.08.2017**
(21) Application number: 17155370.4
(22) Date of filing: 09.02.2017
(51) Int. Cl.: F01D 25/24, F01D 25/00

(54) **AIRCRAFT ENGINE WITH AN IMPACT PANEL**

(30) Priority: 11.02.2016 US 201615041696
(71) Applicant: General Electric Company, Schenectady, NY 12345 (US)
(72) Inventor: GEMEINHARDT, Gregory Carl, Cincinnati, OH Ohio 45215 (US); SCHULTE, Michael Dominic, West Chester, OH Ohio 45069 (US)
(74) Representative: Williams, Andrew Richard

(57) **Abstract**

An impact panel 100 for a fan casing 40 having a support layer 120 that includes a set of partitioned cavities 110 with open faces 112 and comprising a polymer matrix composite 114 having a nanostructure 116.

## Description

### BACKGROUND OF THE INVENTION

Turbine engines, and particularly gas or combustion turbine engines, are rotary engines that extract energy from a flow of combusted gases passing through a fan with a plurality of blades, then into the engine through a series of compressor stages, which include pairs of rotating blades and stationary vanes, through a combustor, and then through a series of turbine stages, which include pairs of rotating blade and stationary vanes. In the compressor stages, the blades are supported by posts protruding from the rotor while the vanes are mounted to stator disks.

The fan includes a fan casing that can be impacted with debris travelling with the flow of air coming into the engine. The fan casing can include an impact panel which incorporates sound absorption materials to dissipate sound damage. The impact panel also can include a facing sheet to protect the sound absorption materials which are not structural elements and can be easily damaged.

### BRIEF DESCRIPTION OF THE INVENTION

In one aspect, embodiments of the invention relate to an aircraft engine comprising an aircraft engine having a fan drive shaft, a fan comprising a spinner coupled to the drive shaft and a blade array of circumferentially arranged blade extending radially from the spinner, an annular fan casing configured to surround the fan, and an annular impact panel mounted to the fan casing and circumscribing the blade array. The annular impact panel comprises an open framework forming a plurality of cells and a facing sheet comprising a polymer matrix composite having a nanostructure.

In another aspect, embodiments of the invention relate to an aircraft engine comprising an aircraft engine having a flowpath through the engine, an impact panel mounted defining at least a portion of the flowpath and comprising a polymer matrix composite having a nanostructure.

In yet another aspect, embodiments of the invention relate to a facing sheet for a fan casing comprising a support layer that includes a set of partitioned cavities with open faces; and a facing sheet comprising a polymer matrix composite having a nanostructure.

### BRIEF DESCRIPTION OF THE DRAWINGS

In the drawings:
Figure 1 is a schematic cross-sectional diagram of a gas turbine engine for an aircraft.
Figure 2 is an enlarged view of a fan section of the gas turbine engine of Figure 1.
Figure 3 is a cut away view of a facing sheet.

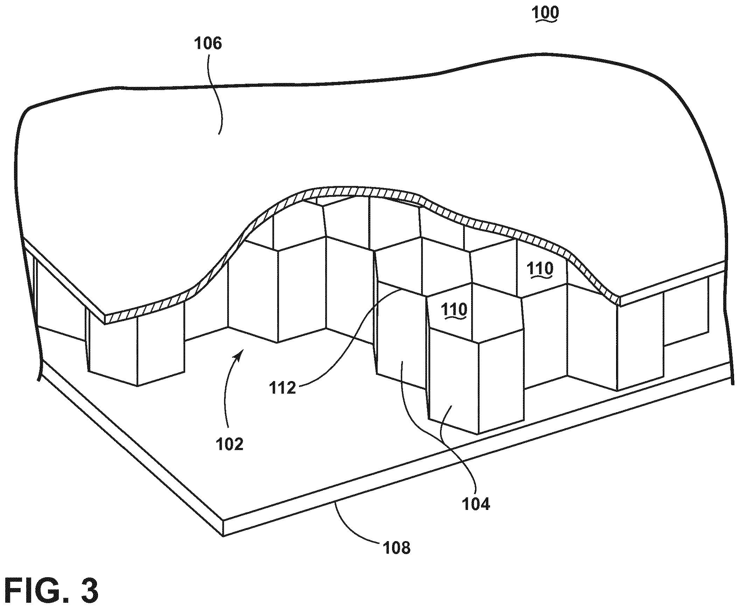

Figure 3 is perspective view of a facing sheet with a call out showing a nanostructure.

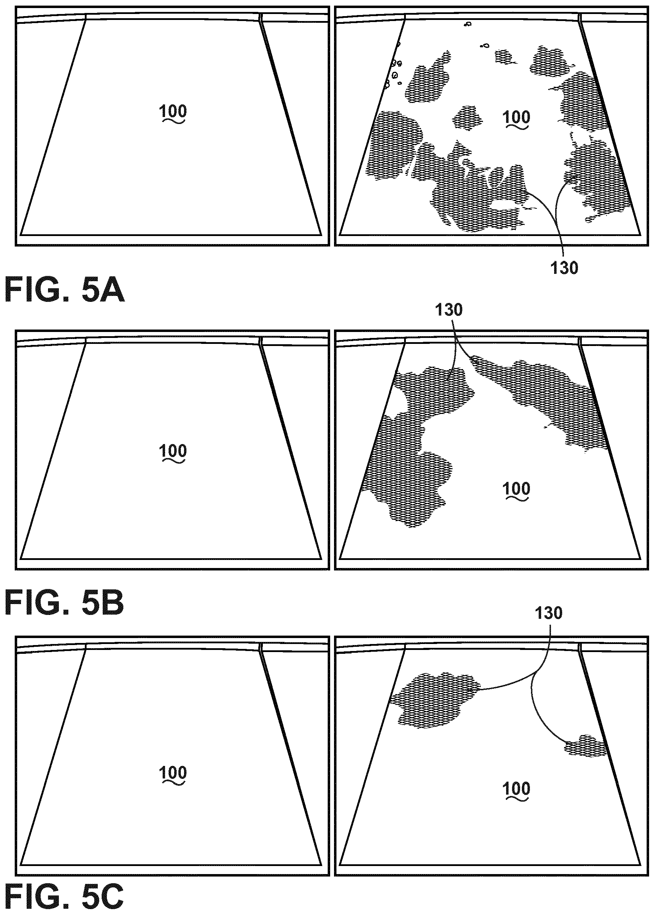

Figure 5A is a before and after schematic of a prototype for a facing sheet.
Figure 5B is a before and after schematic of another prototype for a facing sheet.
Figure 5C is a before and after schematic of a third prototype for a facing sheet.

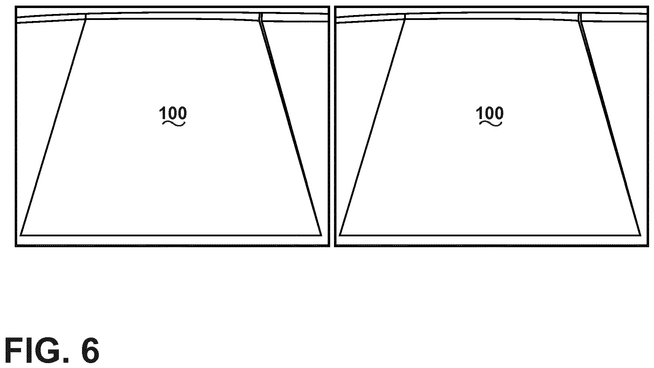

Figure 6 is a before and after schematic of the facing sheet.

### DESCRIPTION OF EMBODIMENTS OF THE INVENTION

The described embodiments are directed to impact panels and more particularly facing sheets for a fan casing. For purposes of illustration, the present invention will be described with respect to an aircraft gas turbine engine. It will be understood, however, that the invention is not so limited and may have general applicability in non-aircraft applications, such as other mobile applications and non-mobile industrial, commercial, and residential applications.

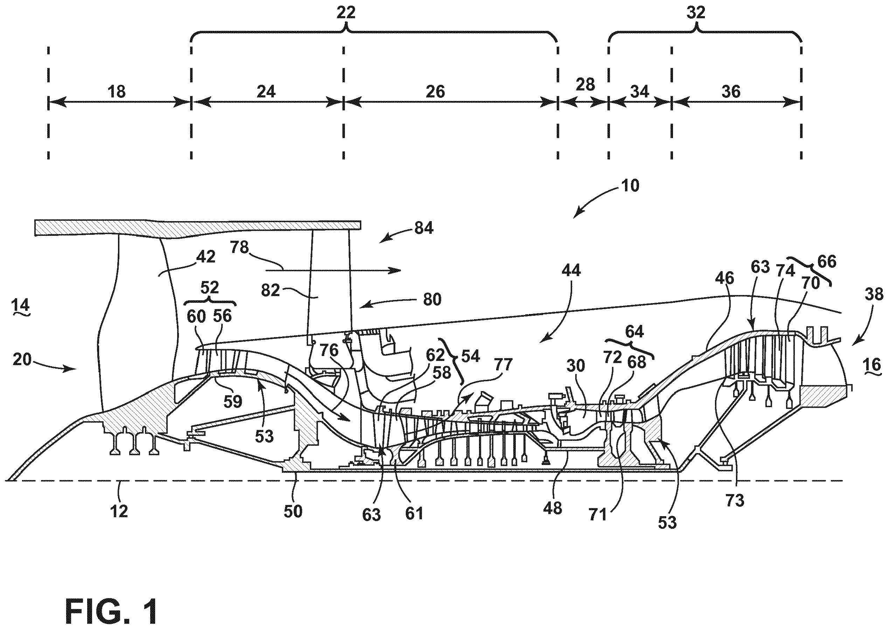

Figure 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes fan casing 40 surrounding the fan 20. The fan 20 comprises a spinner 41 coupled to a drive shaft 43 and a blade array of circumferentially arranged blades 42 extending radially from the spinner 41. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20. The portions of the engine 10 mounted to and rotating with either or both of the spools 48, 50 are also referred to individually or collectively as a rotor 53, 53.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in Figure 1 were selected for illustrative purposes only, and that other numbers are possible.

The blades 56, 58 for a stage of the compressor can be mounted to a disk 59, which is mounted to the corresponding one of the HP and LP spools 48, 50, with each stage having its own disk 59, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding rotating blades 68, 70 are positioned upstream of and adjacent to the static turbine vanes 72, 74. It is noted that the number of blades, vanes, and turbine stages shown in Figure 1 were selected for illustrative purposes only, and that other numbers are possible.

The blades 68, 70 for a stage of the turbine can be mounted to a disk 71, which is mounted to the corresponding one of the HP and LP spools 48, 50, with each stage having its own disk 71, 73. The vanes 72, 74 for a stage of the compressor can be mounted to the core casing 46 in a circumferential arrangement.

The portions of the engine 10 mounted to and rotating with either or both of the spools 48, 50 are also referred to individually or collectively as a rotor 53. The stationary portions of the engine 10 including portions mounted to the core casing 46 are also referred to individually or collectively as a stator 63.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding rotating blades 68, 70 are positioned upstream of and adjacent to the static turbine vanes 72, 74. It is noted that the number of blades, vanes, and turbine stages shown in Figure 1 were selected for illustrative purposes only, and that other numbers are possible.

In operation, an airflow enters along a flowpath 73 through an inlet 75 the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26.

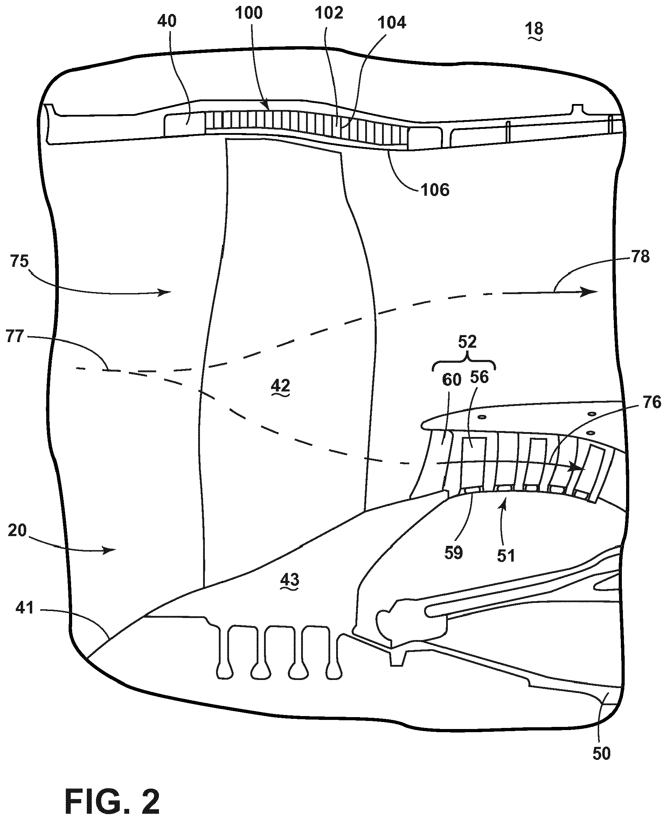

Referring to Figure 2, an enlarged view of the fan section 18, includes the fan casing 40 in which multiple parts are incorporated including an annular impact panel 100 which is mounted to the fan casing 40. The annular impact panel can comprise an open framework 102, forming a plurality of cells 104 and a facing sheet 106 covering the open framework 102 and spaced radially outward of the fan blade 42.

Figure 3 illustrates a portion of the annular impact panel 100 with a portion of the facing sheet 106 removed to better see the open framework 102. The plurality of cells 104 form a support layer and are positioned between the facing sheet 106 and a backing sheet 108. The open framework 102 can include a set of partitioned cavities 110 with open faces 112, for example in a honeycomb pattern.

The cells 104 can be a single layer of hexagonal geometry or multiple layers of the same or different geometry separated by a porous layer, typically identified as a septum. In addition, alternate geometries other than hexagonal can be envisaged including random size cells formed by open cell foams or similar materials.

The open framework 102 is placed for absorbing purposes and is considered a non-structural element. The function of the open framework is to influence the impulse when the impact panel 100 is hit by debris, much like an airbag it decreases the impact force by increasing the time of impact.

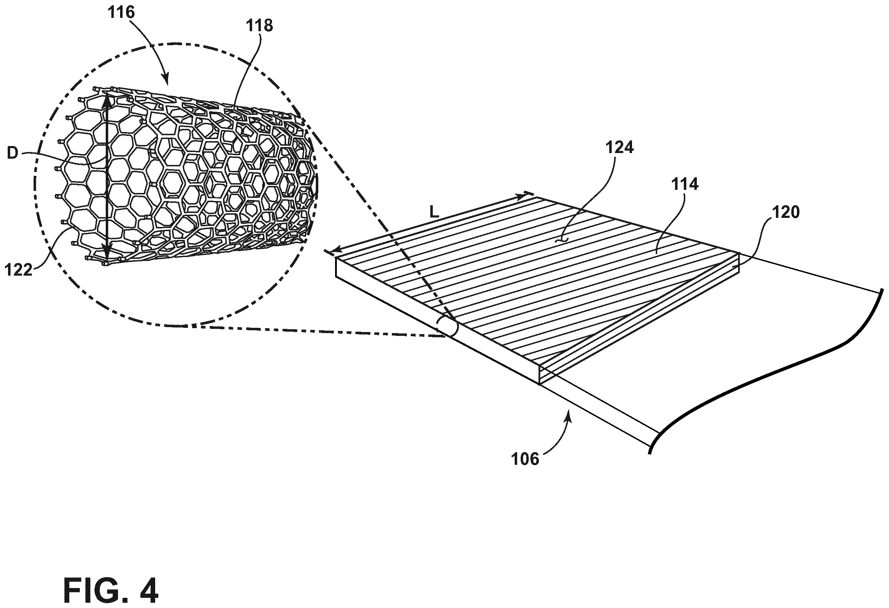

The facing sheet 106 is further illustrated in Figure 4. The facing sheet 106 comprises a polymer matrix composite 114 with a nanostructure 116 comprising nanotubes 118 having at least one dimension on the nanoscale, a diameter D and/or a length L. The polymer matrix composite 114 can comprise at least one layer 120 of carbon fibers 122 infused with resin 124, for example Zyvex resin, in which the nanostructure 116 is dispersed. The facing sheet 106 is not limited to one layer, as multiple layers of infused carbon fibers can also be combined to form the polymer matrix composite 114. The nanostructure can be incorporated into the polymer matrix composite 114 by a number of methods including dispersion in the polymer resin 124, growth onto the layer of carbon fibers 122, or incorporation into a part layup fabrication.

The facing sheet 106 functions as a cover for the open framework 102. Polymer matrix composites are known in the art for exhibiting high strength and stiffness, being light in weight, showing directional strength properties, and having carbon fiber reinforced polymer composites. The facing sheet 106 incorporated with carbon nanotubes helps with energy dissipation in a high impact velocity situation. The facing sheet 106 protects the open framework 102 from any impacts from debris that may enter the engine 10 through the inlet 75.

The assembly of the impact panel 100 with the facing sheet 106 having a resin infused nanostructure minimizes damage as compared to other resin infused materials. Figures 5A, B, and C illustrate three examples of other resin infused materials before and after an ice impact test. When subjected to impact by ice cubes between 1.3 and 2.6 cm (0.5 and 1.0 inch) maximum dimension with a mass flow rate of 0.22 kg/s (0.5 lbs/s) some resin infused materials showed considerable damage 130. Figure 5A is an epoxy resin prepreg combined with a film adhesive, Figure 5B is a thermoplastic prepreg, and Figure 5C is a highly toughened epoxy prepreg.

When the facing sheet 106 has a resin infused nanostructure comprising carbon nanofiber (such as Zyvex Arovex) and is subjected to the same testing the facing sheet 106 exhibits no fiber damage as illustrated in Figure 6.

The nanocomposite materials can be incorporated into the system either during material or part manufacturing and the fabrication of parts with nanocomposite reinforced composites utilizes traditional composite processing equipment. When used in engine flowpath hardware, the nanocomposite reinforced materials show excellent resistance to damage due to impact events such as hail or bird ingestion

The nanostructure serves the purpose of reinforcing the polymer composite matrix for enhanced toughness and durability. Compared to traditional approaches to toughening polymer resins, nanostructure materials have shown comparable to improved damage resistance during an impact event. The nanostructure provides a structural reinforcement as well as vibration damping capability to the resin which results in improved durability of the system.

Traditional approaches to increasing the toughness of polymer composite matrix systems have involved the addition of relatively high loadings of secondary polymeric materials, such as thermoplastics or rubber, during the resin manufacturing which can result in costly materials as well as trade-offs in some mechanical or thermal properties. Other approaches employed include the use of secondary polymeric materials incorporated during the part manufacturing process which can lead to increased system cost and labor intensive manufacturing. While the cost of nanostructure materials themselves is relatively high, the typical loading into the polymer composite matrix is very low which results in an incremental effect to the material or system cost. In addition, nanostructure reinforced polymer systems do not suffer many of the trade-offs in mechanical and thermal performance that are typical for traditional toughened polymer composites.

The use of nanostructure reinforced polymer composite matrix materials provides the potential for equivalent or better damage resistance and durability during impact events at a reduced part in terms of thickness and weight. In addition, the elimination of costly labor intensive part fabrication processes provides the opportunity for reduced total system cost.

It should be appreciated that application of the disclosed design is not limited to turbine engines with fan and booster sections, but is applicable to turbojets and turbo engines as well.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An aircraft engine comprising:
   an aircraft engine having a fan drive shaft;
   a fan comprising a spinner coupled to the drive shaft and a blade array of circumferentially arranged blade extending radially from the spinner;
   an annular fan casing configured to surround the fan; and
   an annular impact panel mounted to the fan casing and circumscribing the blade array, the annular impact panel comprising an open framework forming a plurality of cells and a facing sheet comprising a polymer matrix composite having nanostructure.
2. The aircraft engine of clause 1, wherein the nanostructure comprises carbon nanotubes.
3. The aircraft engine of any preceding clause, wherein the polymer matrix composite comprises at least one layer of fibers.
4. The aircraft engine of any preceding clause, wherein the at least one layer of fibers is infused with a resin in which the nanostructure are dispersed.
5. The aircraft engine of any preceding clause, wherein the polymer matrix composite comprises multiple layers of infused fibers.
6. The aircraft engine of any preceding clause, wherein the fibers are carbon fibers.
7. The aircraft engine of any preceding clause, wherein the nanostructure are grown onto the at least one layer of fibers.
8. An aircraft engine comprising:
   an aircraft engine having a flowpath through the engine;
   an impact panel mounted defining at least a portion of the flowpath and comprising a polymer matrix composite having a nanostructure.
9. The aircraft engine of any preceding clause, wherein the nanostructure comprises carbon nanotubes.
10. The aircraft engine of any preceding clause, wherein the polymer matrix composite comprises at least one layer of fibers.
11. The aircraft engine of any preceding clause, wherein the at least one layer of fibers is infused with a resin in which the nanostructure are dispersed.
12. The aircraft engine of any preceding clause, wherein the polymer matrix composite comprises multiple layers of infused fibers.
13. The aircraft engine of any preceding clause, wherein the fibers are carbon fibers.
14. The aircraft engine of any preceding clause, wherein the nanostructure are grown onto the at least one layer of fibers.
15. The impact panel of any preceding clause, wherein the facing sheet shows no fiber damage when subjected to impact by ice cubes up to 1.0 inch maximum dimension at up to 750 ft/sec.
16. An impact panel for a fan casing comprising:
   a support layer that includes a set of partitioned cavities with open faces; and
   a facing sheet comprising a polymer matrix composite having a nanostructure.
17. The impact panel of any preceding clause, wherein the nanostructure comprises carbon nanotubes.
18. The impact panel of any preceding clause, wherein the polymer matrix composite comprises at least one layer of fibers.
19. The impact panel of any preceding clause, wherein the at least one layer of fibers is infused with a resin in which the nanostructure are dispersed.
20. The impact panel of any preceding clause, wherein the polymer matrix composite comprises multiple layers of infused fibers.
21. The impact panel of any preceding clause, wherein the fibers are carbon fibers.
22. The impact panel of any preceding clause, wherein the nanostructure are grown onto the at least one layer of fibers.
23. The impact panel of any preceding clause, wherein the facing sheet shows no fiber damage when subjected to impact by ice cubes up to 1.0 inch maximum dimension at up to 750 ft/sec.

## Claims

1. An aircraft engine (10) comprising:
an aircraft engine (10) having a flowpath (77) through the engine (10);
an impact panel (100) mounted defining at least a portion of the flowpath (77) and comprising a polymer matrix composite (114) having a nanostructure (116).

2. The aircraft engine (10) of claim 1 wherein the nanostructure (116) comprises carbon nanotubes (118).

3. The aircraft engine (10) of claim 1 or 2, wherein the polymer matrix composite (114) comprises at least one layer (120) of fibers (122).

4. The aircraft engine (10) of claim 1, 2 or 3, wherein the at least one layer (120) of fibers (122) is infused with a resin (124) in which the nanostructure (116) are dispersed.

5. The aircraft engine (10) of any preceding claim, wherein the polymer matrix composite (114) comprises multiple layers (120) of infused fibers (122).

6. The aircraft engine (10) of claim 5, wherein the fibers (122) are carbon fibers (122).

7. The aircraft engine (10) of any preceding claim, wherein the nanostructure (116) are grown onto the at least one layer (120) of fibers (122).

8. The aircraft engine (10) of any preceding claim, wherein the impact panel (100) shows minimal or no fiber damage (130) when subjected to impact by ice cubes between 0.5 and 1.0 inch maximum dimension for at least 30 seconds at 750 ft/sec at a mass flow rate of 0.5 lbs/sec.

9. The aircraft engine (10) of any preceding claim, wherein the impact panel (100) shows no fiber damage (130) when subjected to impact by ice cubes between 0.5 and 1.0 inch maximum dimension for at least 45 seconds at 750 ft/sec at a mass flow rate of 0.5 lbs/sec.

10. An impact panel for a fan casing comprising:
a support layer that includes a set of partitioned cavities with open faces; and
a facing sheet comprising a polymer matrix composite having a nanostructure.
